# EUROPÄISCHE PATENTSCHRIFT

(11) **EP 1 999 044 B1**
(45) Veröffentlichungstag und Bekanntmachung des Hinweises auf die Patenterteilung: **16.06.2010**
(21) Anmeldenummer: 06723714.9
(22) Anmeldetag: 24.03.2006
(51) Int. Cl.: B65G 19/10, B65G 19/24

(54) **KRATZER FÜR GLIEDERKETTEN VON KETTENKRATZERFÖRDERERN UND KRATZERSICHERUNGSELEMENT HIERFÜR**
SCRAPERS FOR LINK CHAINS OF SCRAPER CHAIN CONVEYORS, AND SCRAPER-SECURING ELEMENT THEREFOR
RACLETTE POUR CHAINES A MAILLONS DE TRANSPORTEURS A CHAINES A RACLETTES ET ELEMENT DE BLOCAGE DE RACLETTES POUR CES RACLETTES

(43) Veröffentlichungstag der Anmeldung: 10.12.2008
(73) Patentinhaber: Bucyrus Europe GmbH, 44534 Lünen (DE)
(72) Erfinder: MERTEN, Gerhard, 44534 Lünen (DE); MEYA, Hans, 59368 Werne (DE)
(74) Vertreter: Althaus, Arndt
(86) Internationale Anmeldenummer: PCT/EP2006/002735
(87) Internationale Veröffentlichungsnummer: WO 2007/110089

(56) Entgegenhaltungen:
- DE-A1- 2 031 875
- DE-A1- 2 160 027
- DE-A1- 3 307 119

## Beschreibung

Die Erfindung betrifft Kratzer für Gliederketten von Kettenkratzerförderern, insbesondere Doppelmittenkettenkratzerförderern, bestehend aus einem einteiligen Kratzerkörper mit einem zwei seitliche Kratzerflügel verbindenden Kopfsteg und wenigstens einer Einlegetasche zwischen den Kratzerflügeln zum Einlegen eines horizontalen Kettengliedes der Gliederkette und Sichern des Kratzers an einem eingelegten horizontalen Kettenglied mittels eines lösbaren, mit dem Kopfsteg verbindbaren Kratzersicherungselement, wobei die einander zugewandten Innenseiten der Kratzerflügel unterhalb des Kopfstegs mit einer Nut versehen sind, der Kopfsteg an beiden Stirnseiten Anlagezonen für die Büge von vertikalen Kettengliedern der Gliederkette und an seiner Unterseite zu beiden Seiten der Anlagezonen ein Schenkelbett für Schenkel der horizontalen Kettenglieder der Gliederkette aufweist. Die Erfindung betrifft auch das für diese Kratzer vorgesehene Kratzersicherungselement.

Ein gattungsgemäßer Kratzer ist aus der DE 102 25 341 C1 bekannt. Der bekannte Kratzer kann an Gliederketten befestigt werden, deren horizontalen und vertikalen Kettenglieder jeweils aus ovalen Ringösengliedern mit runden Kettenbügen bestehen. Die Befestigung des Kratzers an den horizontalen Kettengliedern dieser Gliederketten erfolgt mittels eines Sicherungsbügels, der einstückig zwischen den beiden Innenseiten der Kratzerflügel verläuft und die horizontalen Kettenglieder von unten gegen die Unterseite des Kopfstegs klemmt. Die Sicherung des Bügels am Kopfsteg gegen Lösen erfolgt mittels in Durchgangsbohrungen einsetzbarer Spannstifte, die Zapfen durchgreifen, die an der Oberseite des Bügels ausgebildet sind und in entsprechende Riegelaussparungen im Kopfsteg eingreifen.

Aus der DE 197 01 579 A1 ist eine Gliederkette bekannt, deren Bugteile gerade Stirnzonen aufweisen und deren vertikale Kettenglieder rundumlaufend einen konstanten, am Außenumfang mit einer Abflachung versehenen Drahtquerschnitt aufweisen. Eine derartig ausgebildete Gliederkette kann auch in Hochleistungskettenkratzerförderern zum Einsatz kommen und die Kettenglieder unterliegen einem geringeren Verschleiß als die einer Standardkratzerkette mit vertikalen und horizontalen Runddraht-Kettengliedern. Die aus der DE 197 01 579 A1 bekannten Kratzer zum Anschluß an diese Gliederkette weisen einen Kopfsteg auf, an dessen Unterseite ein Zapfen vorspringt, auf den ein einen Quersteg aufweisendes horizontales Stegkettenglied aufsteckbar ist und mittels separater Riegelleisten festlegbar ist. Bei einer besonderen Ausgestaltung von Kratzer und horizontalem Kettenglied können die Durchgriffe in den Querstegen auch im wesentlichen T-förmig ausgebildet sein. Diese Ausgestaltung ermöglicht eine formschlüssige Verriegelung von Zapfen und Quersteg, wobei die Kettenglieder an den Zapfen nur in einer vorgegebenen Schwenklage montierbar sind. Die in der DE 197 01 579 A1 vorgesehenen Kratzer erfordern spezielle horizontale Stegkettenglieder mit Quersteg und sind außerdem nicht geeignet, den hohen Kräften bei einem Hochleistungsförderer standhalten zu können.

Die DE 33 07 119 offenbart einen Schlosskratzer zur Verwendung an Kratzerketten für einen untertägigen Einzelmittelkettenkratzerförderer. Der Schlosskratzer ist ausgebildet, an einem mehrteiligen, blockförmigen Kettenschloss angeschlossen zu werden, wobei mit dem Kettenschloss kurze Kettenstrangabschnitte einer Kratzerkette miteinander verbunden werden. Das Kratzerschloss, welches abweichend von den und wesentlich kräftiger als die weiteren horizontalen Kettenglieder des Kettenstrangs ausgebildet ist, besteht aus zwei symmetrischen Kettenschlosshälften mit einem rechteckförmigen Einfachschenkel und einem rechteckförmigen Gabelschenkel, die wechselseitig ineinandergesteckt werden können, wobei der Gabelschenkel jeweils außenseitig mit einem Zapfenvorsprung versehen ist. Der Einfachschenkel und der Gabelschenkel jeder Schlosshälfte sind über einen Einhängbügel für die vertikalen Kettenglieder verbunden, wobei die Schenkel über die Einhängbügel nach oben und unten hinausragen. Der Schlosskratzer ist an seiner Unterseite mit einer Einlegetasche versehen, die jeweils seitlich mit Zapfenaufnahmen für die Zapfenvorsprünge versehen ist. Der Schlosskratzer steht im Betriebseinsatz ausschließlich mit dem Kratzerschloss in Kontakt und das Kettenschloss wird fest zwischen dem Kopfsteg und einem Riegelstück zum Sichern des Kratzers am Kratzerschloss eingespannt.

Aufgabe der Erfindung ist es, einen Kratzer insbesondere für eine Gliederkette mit Sonderkettengliedern zu schaffen, der eine ausreichend hohe Standzeit aufweist und selbst bei großer Breite und damit großer möglicher Förderleistung sicher und verschleißarm von den horizontalen Kettengliedern einer Gliederkette mitgenommen wird.

Diese sowie weitere Aufgaben werden durch die in Anspruch 1 angegebene Erfindung gelöst. Erfindungsgemäß erstrecken sich die Nuten in den Innenseiten der Kratzerflügel über die Höhe der Schenkelbetten bis zum Kopfsteg und sie bilden Aufnahmen für Mitnahmevorsprünge an den Außenflächen der Schenkel der horizontalen Kettenglieder. Die erfindungsgemäßen Kratzer sind insbesondere für eine Gliederkette geeignet, die die Anmelderin zusammen mit den Kratzern entwickelt hat und die Gegenstand der WO 2007/110088 A1 mit demselben Anmeldetag sind. Bei dieser Gliederkette sind an den Außenflächen der Schenkel der horizontalen Kettenglieder Mitnahmevorsprünge ausgebildet, die durch Formschluß mit den von den Nuten gebildeten Aufnahmen an den Kratzern zusammenwirken können, um hierdurch die Kratzer gleichmäßig und gut abgestützt in Förderrichtung tung vorzugsweise schiebend zu bewegen. Um dies zu erreichen, erstrecken sich die Nuten in den Kratzerflügeln zu beiden Seiten der Schenkelbetten bis zum Kopfsteg, so daß in Laufrichtung der Gliederkette aufgrund des Eingreifens der Mitnahmevorsprünge in die Nuten im Kratzer eine besonders sichere, gleichmäßige und auch verschleißarme Mitnahme der Kratzer erreicht wird.

Bei der insbesondere bevorzugten Ausgestaltung erstrecken sich die Nuten in den Innenseiten bis zur Unterseite der Kratzerflügel. Dies ermöglicht nicht nur ein genaues Ansetzen und Einlegen der horizontalen Kettenglieder, sondern die Nuten können, wie weiter unten noch erläutert werden wird, zugleich auch ein Kratzersicherungselement durch Formschluß in Bewegungsrichtung fixieren und festhalten.

Die Erfindung ist grundsätzlich auch bei Kratzern für Einzelmittenkettenkratzerförderer einsetzbar, bei der nur zwei Nuten in den Innenseiten der Kratzerflügel ausgebildet sind und ein Kratzersicherungselement sich zwischen diesen beiden Nuten in den Innenseiten der Kratzerflügel erstreckt. Die bevorzugte Ausgestaltung der Kratzer weist allerdings am Kopfsteg zwischen beiden Kratzerflügeln einen Zwischensteg auf, der jeweils mit seinen den Innenseiten zugewandten Außenseiten eine Einlagetasche an einer Seite begrenzt und auch in der Außenseite jeweils eine Nut aufweist, die sich über die Höhe der Schenkelbetten bis zum Kopfsteg erstreckt und eine Aufnahme für einen Mitnahmevorsprung an der Außenfläche der Schenkel der horizontalen Kettenglieder bildet. Ein entsprechender Kratzer weist dann mithin zwei nebeneinanderliegende Einlegetaschen für horizontale Kettenglieder der nebeneinanderliegenden Gliederkettenstränge einer Doppelmittenkette auf. Jedes in eine Einlegetasche eingelegte horizontale Kettenglied greift dann mit seinen Mitnahmevorsprüngen zu einer Seite des Kettenbettes in eine Nut an der Innenseite eines der Kratzerflügel und zur anderen Seite des Kettenbettes in eine Nut in der Außenseite des Zwischenstegs ein. Gemäß einer möglichen Ausgestaltung könnte dann ein Kratzersicherungselement vorgesehen sein, welches sich weiterhin ausschließlich zwischen den beiden Nuten in den Innenseiten erstreckt und als einteiliges Kratzersicherungselement zugleich beide eingelegten horizontalen Kettenglieder am Kratzer gegen Herausfallen sichert. Die insbesondere bevorzugte Ausgestaltung sieht allerdings vor, daß die Nuten auch in den Außenseiten bis zur Unterseite des Mittelstegs herabreichen, wobei die Unterseite des Mittelstegs dann im wesentlichen fluchtend mit den Unterseiten der Kratzerflügel ausgebildet sind, um die Auflage der Kratzer auf dem Fördererboden eines Förderers zu verbessern. Es sind mithin zwei Einlegetaschen vorhanden, in die jeweils ein horizontales Kettenglied mit zugehörigem Kratzersicherungselement eingesetzt und gegen herausfallen gesichert werden kann.

Bei der insbesondere bevorzugten Ausgestaltung sind die Schenkelbetten zum Einlegen von horizontalen Kettengliedern ausgebildet, die gerade Stirnzonen an den Bugteilen und mit Mitnahmevorsprüngen versehene Einziehungen in den Außenflächen der die Bugteile miteinander verbindenden Schenkeln aufweisen. Weiter vorzugsweise sind die Anlagezonen am Kopfsteg des Kratzers zum Abstützen von vertikalen Kettengliedern einer Gliederkette ausgebildet, deren Drahtquerschnitt rundumlaufend konstant ist und an der Außenseite mit einer Abflachung und an der Innenseite vorzugsweise mit einer Kreiswölbung versehen ist, wobei vorzugsweise am Übergang der Abflachung zum Kreisbogen Abschrägungen ausgebildet sind. Für die Aufnahme der horizontalen Kettenglieder einer entsprechenden Kratzergliederkette ist besonders vorteilhaft, wenn die Schenkelbetten aus flach zu den Innenseiten der Kratzerflügel und/oder den Außenseiten des Zwischenstegs auslaufenden Flächen bestehen, an denen sich dann die im wesentlichen rechteckförmigen horizontalen Kettenglieder besonders gut abstützen können.

Die Befestigung des Kratzersicherungselementes am Kratzer erfolgt vorzugsweise mittels einer Befestigungsschraube sowie einer mit dieser zusammenwirkenden Mutter. Hierzu ist besonders vorteilhaft, wenn im Kopfsteg zwischen beiden Anlagezonen ein Schraubendurchgriff für den Schaft der Befestigungsschraube und/oder eine Vertiefung zum Einsetzen einer mit der Befestigungsschraube zusammenwirkenden Mutter ausgebildet ist. Insbesondere vorteilhaft ist, wenn in jede Vertiefung eine Einführschräge für ein Lösewerkzeug mündet, um auch nach zahlreichen Betriebsstunden eine ggf. festgerostete Mutter von dem Schaft der Befestigungsschraube lösen zu können. Das Lösen bzw. Anziehen der Mutter kann hierbei besonders vorteilhaft von oben und damit jederzeit gut zugänglich im Obertrum eines Kettenkratzerförderers erfolgen, wobei ggf. zur Montage die Kratzerflügel nur von oben auf die Kratzersicherungselemente und die Befestigungsschrauben aufgesteckt werden müssen und die Schrauben angezogen werden müssen.

Für das Zusammenwirken des Kratzers mit den vertikalen Kettengliedern ist besonders vorteilhaft, wenn die vorzugsweise als kreisbogenförmige Wölbungen ausgeführten Anlagezonen sich auch über die Stirnseiten eines am Kopfsteg zwischen den Schenkelbetten nach unten vorspringenden Fortsatzes erstrecken und/oder ausschließlich als Vertiefungen an den Stirnseiten ausgebildet sind. An diesem Fortsatz können sich dann relativ großflächig die vorzugsweise abgeflachten Außenseiten der vertikalen Kettenglieder anlegen, wodurch eine relativ große Anlagefläche zwischen den vertikalen Kettengliedern und den Stirnseiten der Kratzer erreicht wird und gleichzeitig eine gute Abwinkelbarkeit der vertikalen Kettenglieder in Vertikalrichtung ermöglicht wird. Diese vertikale Abwinkelbarkeit ist insbesondere erforderlich, wenn die Gliederkette mit den angeschlossenen Kratzern an einem angetriebenen Kettenrad umläuft. Zweckmäßigerweise ist der Fortsatz zentral mit dem Schraubendurchgriff versehen.

Wie weiter oben bereits dargelegt ist besonders vorteilhaft, wenn die Kratzer Kratzersicherungselemente aufweisen, die von unten in die Einlegetaschen einsetzbar sind und an ihrer Oberseite Schenkelbetten für die Schenkel der horizontalen Kettenglieder aufweisen sowie an ihren Querseiten einen in die Nuten einführbaren Vorsprung aufweisen. Der Vorsprung an den Querseiten des Kratzersicherungselementes sichert dieses dann durch Formschluß in den Nuten in den Innenseiten der Kratzerflügel bzw. den Außenseiten des vorzugsweise vorhandenen Zwischensteg, wodurch die Nuten eine Doppelfunktion erhalten, nämlich einerseits eine formschlüssige Verriegelung zwischen horizontalen Kettengliedern und Kratzer und andererseits eine formschlüssige Verriegelung in Laufrichtung der Gliederkette zwischen den Kratzersicherungselementen und den Kratzern zu bewirken. Weiter vorzugsweise kann der Vorsprung aus einem Vertikalsteg mit vorzugsweise trapezförmigem Querschnitt bestehen, der entsprechend mit Nuten in den Innen- und Außenseiten am Kratzer zusammenwirkt, die ebenfalls einen trapezförmigen Querschnitt aufweisen und sich von einem Nutgrund zu den Oberflächen der Innenseiten bzw. Außenseiten am Kratzer erweitern.

Insbesondere für die Montage des Kratzers an der Gliederkette ist besonders vorteilhaft, wenn die Kratzersicherungselemente in ihrer Bodenfläche mit einer Aufnahmeaussparung für den Schraubenkopf einer Befestigungsschraube versehen sind. Besonders günstig ist, wenn die Aufnahmeaussparung eine formschlüssige Verdrehsicherung für den Schraubenkopf bildet, da dann ausschließlich ein Montagewerkzeug für die auf den Schaft der Befestigungsschraube aufschraubbare Mutter von oben angesetzt werden muß, ohne daß die Befestigungsschraube gekontert werden muß. Zum Anziehen der Mutter reicht dann aus, ein Verdrehen des Kratzers zu verhindern. Die Aufnahmeaussparung kann insbesondere als Querschlitz ausgebildet sein, der z.B. den Schraubenkopf einer Hammerkopfschraube als Befestigungsschraube verdrehfest aufnimmt.

Die Breite des Kratzersicherungsmittels kann vorzugsweise im wesentlichen dem minimalen Abstand der Anlagezonen für die vertikalen Kettenglieder an den Stirnzonen des Kopfsteges entsprechen. Weiter vorzugsweise kann das Kratzersicherungselement mittig zwischen beiden Mitnahmevorsprüngen mit einer Erhebung versehen sein, zu deren Seiten Schenkelbetten für die Schenkel der horizontalen Kettenglieder ausgebildet sind. Die Erhebung und/oder der Fortsatz können seitlich mit Rundungen zum Zusammenwirken mit den Schenkeln der Kettenglieder der Gliederkette versehen sein, wobei dann die Rundungen vorzugsweise zur Außen- oder Innenseite hin flach auslaufen. Die Erhebung und/oder der Fortsatz können bei den erfindungsgemäßen horizontalen Kettengliedern in Innenösen dieser Kettenglieder einfassen und dort im Montagezustand von Kratzer, horizontalem Kettenglied und Kratzersicherungselement aufeinanderliegen.

Die Erfindung betrifft auch ein Kratzersicherungselement zum Sichern eines Kratzers an horizontalen Kettengliedern einer Gliederkette eines Doppelmittenkettenkratzerförderers, die in Einlegetaschen am Kratzer eingelegt sind, wobei der Grundkörper des Kratzersicherungselementes an seinen Querseiten mit Vorsprüngen zum Eingreifen in Nuten in der Innenseite der Kratzerflügel und der Außenseite eines Zwischenstegs am Kopfsteg eines Kratzers versehen ist.

Weitere Vorteile und Ausgestaltungen eines erfindungsgemäßen Kratzers samt Kratzersicherung ergeben sich aus der nachfolgenden Beschreibung eines in der Zeichnung gezeigten bevorzugten Ausführungsbeispiels. In der Zeichnung zeigen:
- **Fig. 1**: eine Draufsicht, teilweise aufgebrochen, auf einen an einem Gliederstrang einer Doppelmittenkette ange- schlossenen Kratzer;
- **Fig. 2**: eine Schnittansicht entlang II-II in Fig. 1;
- **Fig. 3**: einen Längsschnitt, teilweise aufgebrochen, durch die beiden Einlegetaschen mit eingelegten und gesi- cherten horizontalen Kettengliedern, teilweise auf- gebrochen;
- **Fig. 4**: in einer Explosionsdarstellung in Seitenansicht eine Einlegetasche, zwei Kettenglieder und ein Kratzersi- cherungselement vor der Montage;
- **Fig. 5**: in Ansicht auf die Unterseite die eine Hälfte eines erfindungsgemäßen Kratzers;
- **Fig. 6**: einen Längsschnitt durch einen erfindungsgemäßen Kratzer, teilweise aufgebrochen
- **Fig. 7**: eine Ansicht entlang VII-VII in Fig. 6 auf eine Nut in der Innenseite der Kratzerflügel; und
- **Fig. 8**: einen Kettenstrang einer Gliederkette, bei der die erfindungsgemäßen Kratzer bevorzugt zum Einsatz kom- men.

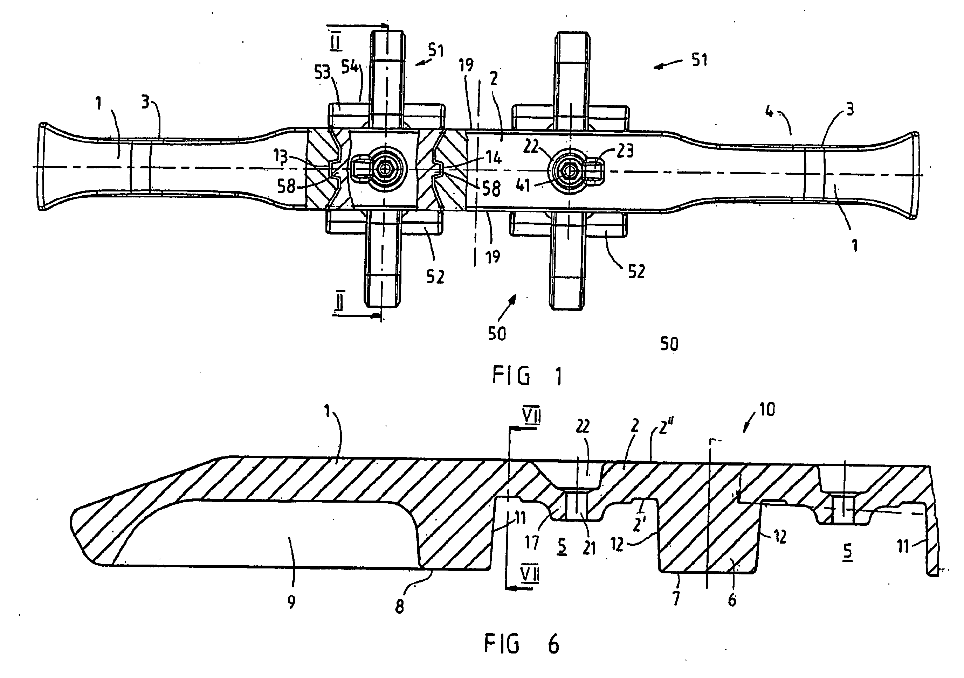

Der in den Figuren insgesamt mit 10 bezeichnete Kratzer ist für einen relativ breit bauenden untertägigen Hochleistungs-Kettenkratzerförderer ausgebildet, in welchem zum Fördern des Gewinnungsgutes, insbesondere Kohle, eine als Doppelmittenkette ausgeführte Gliederkette 50 mit zwei identisch zueinander ausgebildeten Gliederkettensträngen 51 umlaufen. Die erfindungsgemäßen Kratzer 10 werden hierbei jeweils im Abstand voneinander an horizontalen Kettengliedern 52 angeschlossen, welche, wie bereits Fig. 1 gut erkennen läßt, Kettenbüge 53 mit einer geradlinigen Stirnseite 54 aufweisen.

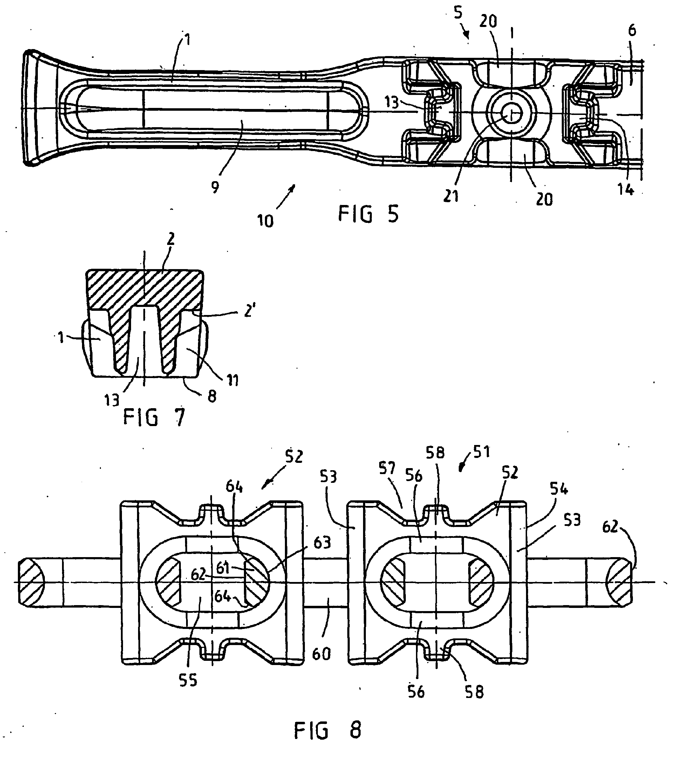

Die Gliederkette 51 ohne montierte Kratzer ist in Draufsicht in Fig. 8 gezeigt, auf den nun zuerst Bezug genommen wird. Jeweils zwei identisch zueinander ausgebildete horizontale Kettenglieder 52 mit den die geraden Stirnseiten 54 aufweisenden Bugteilen 53 werden mittels eines vertikalen Kettengliedes 60 miteinander verbunden, das rundumlaufend ein konstantes Querschnittsprofil 61 aufweist. Das Querschnittsprofil 61 der vertikalen Kettenglieder 60 ist rundumlaufend an seiner Außenseite mit einer Abflachung 62 versehen und an seiner einer Innenöffnung zugewandten Innenseite mit einer kreisbogenförmigen Wölbung 63 ausgeführt. Die Abflachung 62 des Querschnittsprofils 61 geht jeweils über Abschrägungen 64 in die kreisbogenförmige Wölbung 63 über und die vertikalen Kettenglieder 60, die insgesamt relativ niedrig bauen, greifen in Innenöffnungen 55 der horizontalen Kettenglieder 52 ein. Sämtliche horizontalen Kettenglieder 52 weisen Schenkel 56 auf., die die an der Stirnseite rechteckförmig ausgeführten Bugteile 53 miteinander verbinden, und die Schenkel 56 sind an ihrer Außenseite mit einer Einziehung 57 versehen sind, in der mittig zwischen den beiden Bugteilen 53 ein in die Einziehung 57 hineinragender Mitnahmevorsprung 58 mit trapezförmigem Querschnittsprofil ausgebildet ist, der einem verbesserten Kratzeranschluß durch formschlüssige Mitnahme der Kratzer dient. Die Gliederkette 51 mit den annähernd reckteckförmigen horizontalen Kettengliedern 52 und den flachbauenden vertikalen Kettengliedern 60 eignet sich besonders gut für Hochleistungskettenkratzerförderer, da einerseits die horizontalen Kettenglieder 52 beim Umlauf um ein Kettenrad nur geringen Flächenpressungen mit den Taschen des Kettenrades unterliegen und andererseits auch das Gelenkspiel zwischen den vertikalen Kettengliedern 60 und den horizontalen Kettengliedern 52 insbesondere durch die Abschrägungen 64 verbessert ist, wodurch insgesamt das Verschleißverhalten der Gliederkette 51 minimiert ist. Die in Fig. 8 dargestellte Kratzerkette bildet Gegenstand einer separaten Anmeldung mit gleichem Anmeldedatum, auf deren Offenbarung zur Vervollständigung der vorliegenden Offenbarung verwiesen wird.

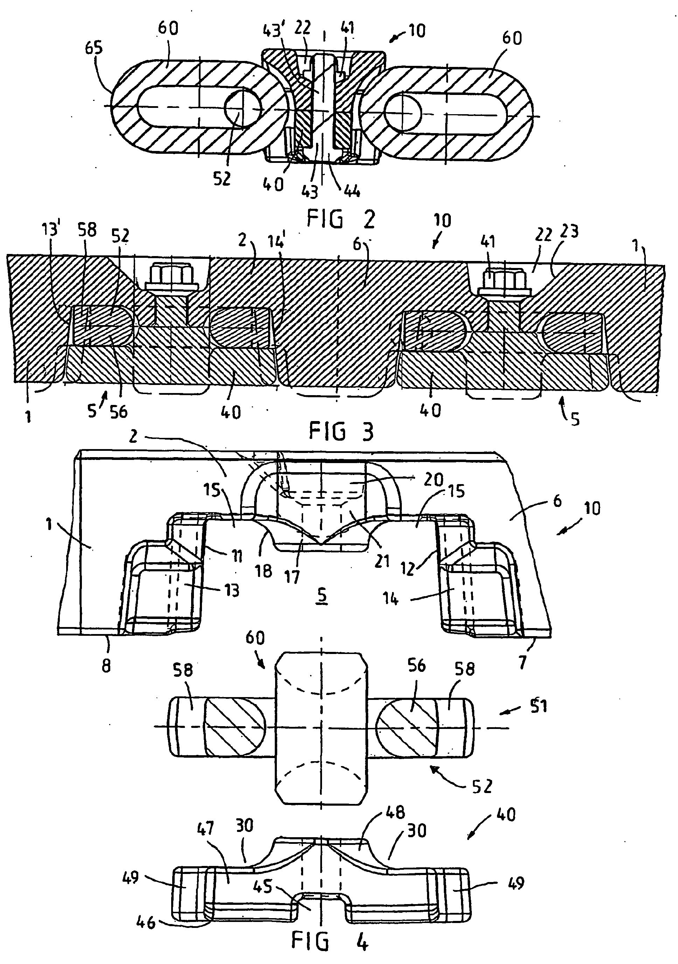

Der Aufbau der zum Anschluß an die horizontalen Kettenglieder 52 ausgeführten Kratzer 10 wird nun unter zusätzliche Bezugnahme auf die Fig. 2 bis 7 erläutert. Jeder Kratzer 10 weist an seinen seitlichen Enden zwei Kratzerflügel 1 auf, die mittels eines Kopfstegs 2 integral miteinander verbunden sind. Der erfindungsgemäße Kratzer 10 besteht vorzugsweise aus einem Schmiedeteil und die Stirnseiten 3 der Kratzerflügel 1, welche bis zur Unterseite 8 des Kratzers 10 herabreichen, weisen konvexe Einziehungen 4 auf, um das Fördervermögen der erfindungsgemäßen Kratzer 1 im Betriebseinsatz zu verbessern. Der Anschluß der Kratzer 10 an den horizontalen Kettengliedern 52 der Doppelmittenkette 50 erfolgt in Einlegetaschen 5 unterhalb des Kopfstegs 2. Die beiden nebeneinander liegenden Einlegetaschen 5 sind hierbei mittels eines kräftigen, im Querschnitt trapezförmigen Zwischenstegs 6 voneinander getrennt, dessen Unterseite 7 bündig mit der Unterseite 8 der Kratzerflügel 1 abschließt, wie insbesondere aus Fig. 6 ersichtlich ist. Zur Gewichtsreduzierung der Kratzer 10 sind beide Kratzerflügel 1 mit zur Unterseite 8 offenen Aushöhlungen 9 versehen, die vorzugsweise beim Urformen des Kratzers 10 bereits vorgesehen werden. Jeder Kratzerflügel 1 weist unterhalb des Kopfstegs 2 eine Innenseite 11 auf, die eine der beiden seitlichen Begrenzungen für die Einlegetaschen 5 bildet. Die andere seitliche Begrenzung jeder Einlegetasche 5 wird von den jeweiligen Außenseiten 12 des Mittelstegs 6 gebildet. Die Innen- und Außenseiten 11, 12 divergieren geringförmig, wodurch die Breite der Einlegetaschen 5 zur Unterseite 7 bzw. 8 hin zunimmt. Für die formschlüssige Verankerung der die Mitnahmevorsprünge 58 aufweisenden horizontalen Kettenglieder 52 in den Einlegetaschen 5 sind sowohl in den Innenseiten 11 der Kratzerflügel 1 als auch in den Außenseiten 12 des Mittelstegs 6 Nuten 13 bzw. 14 ausgebildet, die im wesentlichen von der Unterseite 8 des Kratzers 10 bis zur Unterseite 2' des Kopfstegs 2 aufragen. Die erfindungsgemäß vorgesehenen Nuten 13 in den Innenseiten 11 und Nuten 14 in den Außenseiten des Zwischenstegs 6 sind besonders gut aus den Fig. 1, 4, 5 und 7 ersichtlich. Da die Nuten 13 bzw. 14 über die gesamte Höhe der Einlegetaschen 5 verlaufen, erstrecken sie sich sowohl über einen Bereich, in welchem in jeder Einlegetasche 5 ein Kratzersicherungselement 40 aufgenommen wird, als auch über denjenigen Bereich unmittelbar unterhalb der Unterseite 2' des Kopfsteges 2, in welchem Schenkelbetten 15 für die Schenkel 56 der horizontalen Kettenglieder 52 ausgebildet sind. Die Fig. 3 und 4 zeigen hierbei den Zustand nach bzw. vor der Montage des horizontalen Kettengliedes 52 und des Kratzersicherungselementes 40 in den Einlegetaschen 5. Fig. 3 verdeutlicht, daß die Mitnahmevorsprünge 58 an den horizontalen Schenkeln 56 sich bis zum Nutgrund 13' bzw. 14' der jeweiligen Nuten 13, 14 erstrecken, so dass die Kratzer mithin formschlüssig in Bewegungsrichtung der Gliederkette an den horizontalen Kettengliedern 52 festgelegt werden. Fig. 1 zeigt den formschlüssigen Eingriff der Mitnahmevorsprünge 58 in die Nuten 13 bzw. 14. Die Figuren 3 und 4 verdeutlichen ferner, daß zwischen den Schenkelbetten 15 jeder Einlegetasche 5 ein nach unten über den Kopfsteg 2 vorspringender kegelförmiger Fortsatz 17 ausgebildet ist, der seitlich muldenförmige Einziehungen 18 als Teil der Schenkelbetten 15 aufweist. Die Stirnseite des Fortsatzes, die mit der Stirnseite 19 des Kopfstegs 2 zusammenfällt, ist mit gemuldeten Anlagezonen 20 für die Kettenbüge 65 der vertikalen Kettenglieder 60 versehen. Jeweils eine Anlagezone 20 bildet dabei zugleich eine Trennung für die beiden nebeneinanderliegenden Schenkelbetten 15 einer Einlegetasche 5. Der relativ flache, über die Höhe der Kratzer 10 allerdings kreisbogenförmig gewölbte Verlauf der Oberfläche der Anlagezonen 20, an der sich die an der Außenseite abgeflachten Büge der vertikalen Kettenglieder 60 anlegen, ist besonders deutlich aus Fig. 2 und 5 ersichtlich.

Mittig zwischen beiden einander gegenüberliegenden Anlagezonen 20 ist jeder Einlegetasche 5 ein den Kopfsteg 2 senkrecht durchfassender Schraubendurchgriff 21 zugeordnet, der aufgrund des Fortsatzes 17 relativ weit in die Einlegetasche 5 hineinreicht. Zur Oberseite 2" des Kopfstegs 2 mündet jeder Schraubendurchgriff 21 in eine Vertiefung 22, die zur Aufnahme einer Befestigungsmutter 41 dient, wie insbesondere die Fig. 1 und 2 zeigen. In jede Vertiefung 22 mündet hierbei eine Einführschräge 23 für ein Lösewerkzeug, um eine ggf. festgerostete Mutter 41 vom Schaft 43' einer das Kratzersicherungselement 40 und das horizontale Kettenglied 52 in der Einlegetasche 5 festlegenden Befestigungsschraube 43 zu lösen. Die Befestigungsschraube 43 ist als Kopfschraube, insbesondere Hammerkopfschraube ausgeführt, deren Kopf 44 formschlüssig in einen Querschlitz 45 an der Unterseite 46 des Grundkörpers 47 des Kratzersicherungselementes 40 verdrehsicher eingreift, während der Schaft 43' der Befestigungsschraube 43 eine Bohrung im Kratzersicherungselement 40 sowie den Schraubendurchgriff 21 im Kopfsteg 2 durchfaßt, um dann die Befestigungsmutter 41 auf den Schaft 43' aufschrauben zu können.

Wie wiederum insbesondere aus den Fig. 3 und 4 gut ersichtlich ist, weist der Grundkörper 47 des Kratzersicherungselementes 40 an seiner Oberseite eine Erhebung 48 und an seinen Querseiten jeweils einen Vorsprung 49 auf. Die beiden Vorsprünge 49 sind im wesentlichen hinsichtlich Querschnitt und Breite an die Mitnahmevorsprünge 58 der horizontalen Kettenglieder 52 sowie an die Nutgeometrie der Nuten 13, 14 angepaßt, damit im Montagezustand die Vorsprünge 49 an den Querseiten des Kratzersicherungselementes 40 ebenfalls in die Nuten 13 bzw. 14 zu beiden Seiten der Einlegetaschen 5 einfassen können, um das eingelegte horizontale Kettenglied 52 über dessen gesamte Breite nach unten hin abzustützen und Kippbewegungen zwischen horizontalem Kettenglied 52 und dem Kratzer 10 zu vermeiden. Die Erhebung 48 wirkt im Montagezustand von Kratzer 2, Kettenglied 52 und Kratzersicherungselement 40 mit dem Fortsatz 17 an der Unterseite des Kopfsteges 2 zusammen und beide greifen in die Innenöffnungen 55 der horizontalen Kettenglieder 52 ein, wie insbesondere die Fig. 2 und 3 verdeutlichen. Gleichzeitig werden an der Oberseite der Kratzersicherungselemente 40 zusammen mit muldenförmigen Einziehungen zu beiden Seiten der Erhebung 48 Schenkelbetten 30 gebildet, deren Geometrie im wesentlichen an die Geometrie der Schenkelbetten 15 an der Unterseite des Kopfstegs 2 angepaßt ist. Sämtliche Schenkelbetten 15 bzw. 30 laufen jeweils zu den Nuten 13, 14 bzw. zu den Vorsprüngen 49 flach aus, um ein gutes Zusammenspiel und eine breitflächige Auflage mit den Schenkeln 56 der horizontalen Kettenglieder 52 zu erreichen.

Die Montage der Kratzer 20 an den horizontalen Kettengliedern 52 der Doppelmittenkette wird durch die formschlüssige Festlegung der Schraubenköpfe 44 der Befestigungsschrauben 43 besonders erleichtert, da ausschließlich von oben ein Werkzeug zum Anziehen bzw. Lösen der Muttern 41 angesetzt werden muß, ohne daß es erforderlich ist, die Befestigungsschraube von der Unterseite her zu kontern. Die Montage kann insbesondere auch mit einem elektrischen Schraubwerkzeug erfolgen.

Für den Fachmann ergeben sich aus der vorhergehenden Beschreibung zahlreiche Modifikationen, die in den Schutzbereich der anhängenden Ansprüche fallen sollen. Nicht dargestellt ist ein Ausführungsbeispiel, bei dem nur ein Kratzersicherungselement zur Sicherung beider horizontalen Kettenglieder in den Einlegetaschen zum Einsatz kommt. Bei einem derartigen Ausführungsbeispiel würde der Mittelsteg nur bis zur unteren Höhe der Schenkelbetten herabreichen. Ebenfalls nicht dargestellt ist ein Ausführungsbeispiel des Einsatzes eines nur eine Einlegetasche aufweisenden Kratzers an einer Einzelmittenkette.

## Patentansprüche

1. Kratzer für Gliederketten von Kettenkratzerförderern, insbesondere Doppelmittenkettenkratzerförderern, bestehend aus einem einteiligen Kratzerkörper mit einem zwei seitliche Kratterflügel (1) verbindenden Kopfsteg (2) und wenigstens einer Einlegetasche (5) zwischen den Kratzerflügeln (1) zum Einlegen eines horizontalen Kettenglieds (52) der Gliederkette und Sichern des Kratzers (10) an einem eingelegten horizontalen Kettenglied mittels eines lösbaren, mit dem Kopfsteg (2) verbindbaren Kratzersicherungselementes (40), wobei die einander zugewandten Innenseiten (11) der Kratzerflügel (1) unterhalb des Kopfstegs (2) mit einer Nut (13, 14) versehen sind, der Kopfsteg (2) an beiden Stirnseiten (19) eine Anlagezone (20) für die Büge von vertikalen Kettengliedern der Gliederkette und an seiner Unterseite (2') zu beiden Seiten der Anlagezone (20) ein Schenkelbett (15) für Schenkel der horizontalen Kettenglieder aufweist, **dadurch gekennzeichnet, daß** sich die Nuten (13, 14) in den Innenseiten (11) über die Höhe der Schenkelbetten (15) bis zum Kopfsteg (2) erstrecken und Aufnahmen für Mitnahmevorsprünge (58) an den Außenflächen der Schenkel der horizontalen Kettenglieder (52) bilden.

2. Kratzer nach Anspruch 1, **dadurch gekennzeichnet, daß** die Nuten (13) in den Innenseiten (11) bis zur Unterseite (8) der Kratzerflügel (1) herabreichen.

3. Kratzer nach Anspruch 1 oder 2, **dadurch gekennzeichnet, daß** am Kopfsteg (2) zwischen beiden Kratzerflügeln (1) ein Zwischensteg (6) ausgebildet ist, der jeweils mit seinen den Innenseiten zugewandten Außenseiten (12) eine Einlegetasche (5) an einer Seite begrenzt und in der Außenseite (12) eine Nut (14) aufweist, die sich über die Höhe der Schenkelbetten (15) bis zum Kopfsteg (2) erstreckt und eine Aufnahme für einen Mitnahmevorsprung an der Außenfläche der Schenkel der horizontalen Kettenglieder bildet.

4. Kratzer nach Anspruch 3, **dadurch gekennzeichnet, daß** die Nuten (14) in den Außenseiten (12) bis zur Unterseite (7) des Mittelstegs (6) herabreichen.

5. Kratzer nach einem der Ansprüche 1 bis 4, **dadurch gekennzeichnet, daß** die Schenkelbetten (15) zum Einlegen von horizontalen Kettengliedern ausgebildet sind, die geradlinigen Stirnseiten an den Bugteilen und mit Mitnahmevorsprüngen versehene Einziehungen in den Außenseiten der Schenkel aufweisen.

6. Kratzer nach einem der Ansprüche 1 bis 5, **dadurch gekennzeichnet, daß** die Anlagezonen (20) zum Abstützen von vertikalen Kettengliedern einer Gliederkette ausgebildet sind, deren Drahtquerschnitt rundumlaufend konstant ist und an der Außenseite mit einer Abflachung versehen ist.

7. Kratzer nach einem der Ansprüche 1 bis 6, **dadurch gekennzeichnet, daß** die Schenkelbetten (15) aus flach zu den Innenseiten (11) und/oder Außenseiten (12) auslaufenden Flächen bestehen.

8. Kratzer nach einem der Ansprüche 1 bis 7, **dadurch gekennzeichnet, daß** im Kopfsteg (2) zwischen beiden Anlagezonen (20) ein Schraubendurchgriff (21) für den Schaft einer Befestigungsschraube und/oder eine Vertiefung (22) zum Einsetzen einer mit der Befestigungsschraube zusammenwirkenden Mutter ausgebildet ist.

9. Kratzer nach Anspruch 8, **dadurch gekennzeichnet, daß** in jede Vertiefung (22) eine Einführschräge (23) für ein Lösewerkzeug mündet.

10. Kratzer nach einem der Ansprüche 1 bis 9, **dadurch gekennzeichnet, daß** die Anlagezonen (20) sich über die Stirnseiten eines am Kopfsteg (2) zwischen den Schenkelbetten (15) nach unten vorspringenden Fortsatzes (17) erstrecken.

11. Kratzer nach Anspruch 10, **dadurch gekennzeichnet, daß** der Fortsatz (17) zentral mit dem Schraubendurchgriff (21) versehen ist und/oder seitlich mit Rundungen zum Zusammenwirken mit Schenkeln der horizontalen Kettenglieder der Gliederkette versehen ist.

12. Kratzer nach einem der Ansprüche 1 bis 11, **dadurch gekennzeichnet, daß** die Nuten (13, 14) einen trapezförmigen Querschnitt aufweisen und/oder die Kratzerflügel (1) an der Unterseite (8) mit einer Aushöhlung (9) versehen sind.

13. Kratzer nach einem der Ansprüche 1 bis 12, **dadurch gekennzeichnet, daß** die von unten in die Einlegetaschen einsetzbaren Kratzersicherungselemente (40) an ihrer Oberseite Schenkelbetten (30) für die Schenkel der horizontalen Kettenglieder aufweisen und an ihren Querseiten einen in die Nuten (13, 14) einführbaren Vorsprung (49) aufweisen.

14. Kratzersicherungselement zum Sichern eines Kratzers nach einem der Ansprüche 1 bis 13 an einem in einer Einlegetasche am Kratzer eingelegten horizontalen Kettenglied einer Gliederkette eines Doppelmittenkettenkratzerförderer, **dadurch gekennzeichnet, daß** der Grundkörper (47) des Kratzersicherungselementes (40) an seinen Querseiten mit einem Vorsprung (49) zum Eingreifen in Nuten in Innenseiten der Kratzerflügel und Außenseiten eines Zwischenstegs am Kratzer versehen ist.

15. Kratzer nach Anspruch 13 oder Kratzersicherungselement nach Anspruch 14, **dadurch gekennzeichnet, daß** die Kratzersicherungselemente (40) in der Bodenfläche (46) des Grundkörpers (47) mit einer Aufnahmeaussparung (45) für den Schraubenkopf einer Befestigungsschraube versehen sind.

16. Kratzer oder Kratzersicherungselement nach Anspruch 15, **dadurch gekennzeichnet, daß** die Aufnahmeaussparung (45) eine formschlüssige Verdrehsicherung für den Schraubenkopf bildet, wobei vorzugsweise die Aufnahmeaussparung als Querschlitz für den verdrehfesten Eingriff eines Schraubenkopfs einer Hammerkopfschraube als Befestigungsschraube ausgebildet ist.

17. Kratzer oder Kratzersicherungselement nach einem der Ansprüche 13 bis 16, **dadurch gekennzeichnet, daß** das Kratzersicherungselement (40) mittig zwischen beiden Vorsprüngen (49) mit einer Erhebung (48) versehen ist., zu deren beiden Seiten Schenkelbetten (30) für die Schenkel des horizontalen Kettengliedes ausgebildet sind.

18. Kratzer oder Kratzersicherungselement nach einem der Ansprüche 13 bis 17, **dadurch gekennzeichnet, daß** die Erhebung (48) seitlich mit Rundungen zum Zusammenwirken mit Schenkeln der horizontalen Kettenglieder der Gliederkette versehen ist.

19. Kratzer oder Kartzersicherungselement nach einem der Ansprüche 13 bis 18, **dadurch gekennzeichnet, daß** der Vorsprung (49) aus einem Vertikalsteg mit vorzugsweise trapezförmigem Querschnitt besteht.

## Claims

1. Scraper for link chains of scraper chain conveyors, in particular double center scraper chain conveyors, comprising a one-part scraper body with a head web (2) connecting two lateral scraper wings (1) and at least one insertion pocket (5) between the scraper wings (1) for insertion of a horizontal chain link (52) of the link chain and securing the scraper (10) on an inserted horizontal chain link by means of a detachable scraper-securing element (40) which can be connected to the head web (2), wherein the insides (11) facing one another of the scraper wings (1) are provided below the head web (2) with a groove (13, 14), the head web (2) has on both front sides (19) a bearing zone (20) for the fronts of vertical chain links of the link chain and on its underside (2') on both sides of the bearing zone (20) a limb bed (15) for limbs of the horizontal chain links, **characterized in that** the grooves (13, 14) in the insides (11) extend over the height of the limb beds (15) up to the head web (2) and form receivers for entrainment projections (58) on the outer faces of the limbs of the horizontal chain links (52).

2. Scraper as claimed in claim 1, **characterized in that** the grooves (13) in the insides (11) reach up to the underside (8) of the scraper wings (1).

3. Scraper as claimed in claim 1 or 2, **characterized in that** an intermediate web (6) is formed at the head web (2) between both scraper wings (1), which intermediate web (6) in each case delimits an insertion pocket (5) at one side with its outsides (12) which face the insides and has a groove (14) in the outside (12), which groove (14) extends over the height of the limb beds (15) up to the head web (2) and forms a receiver for an entrainment projection on the outer surface of the limbs of the horizontal chain links.

4. Scraper as claimed in claim 3, **characterized in that** the grooves (14) reach in the outsides (12) up to the underside (7) of the central web (6).

5. Scraper as claimed in one of claims 1 to 4, **characterized in that** the limb beds (15) are formed for insertion of horizontal chain links which have straight front sides on the front sections and recesses provided with entrainment projections in the outsides of the limbs.

6. Scraper as claimed in one of claims 1 to 5, **characterized in that** the bearing zones (20) are formed for supporting of vertical chain links of a link chain, whose wire cross-section is constant around the full circumference and is provided on the outside with a flat section.

7. Scraper as claimed in one of claims 1 to 6, **characterized in that** the limb beds (15) comprise surfaces which run out flat towards the insides (11) and/or outsides (12).

8. Scraper as claimed in one of claims 1 to 7, **characterized in that** a screw passage (21) for the shaft of a fixing screw and/or a recess (22) for insertion of a nut which cooperates with the fixing screw is/are formed in the head web (2) between both bearing zones (20).

9. Scraper as claimed in claim 8, **characterized in that** an introduction inclination (23) for a detachment tool opens into each recess (22).

10. Scraper as claimed in one of claims 1 to 9, **characterized in that** the bearing zones (20) extend over the front sides of a projection (17) protruding downward at the head web (2) between the limb beds (15).

11. Scraper as claimed in claim 10, **characterized in that** the projection (17) is provided centrally with the screw passage (21) and/or is provided laterally with rounded sections for cooperation with limbs of the horizontal chain links of the link chain.

12. Scraper as claimed in one of claims 1 to 11, **characterized in that** the grooves (13, 14) have a trapezoidal cross-section and/or the scraper wings (1) are provided on their underside (8) with a cavity (9).

13. Scraper as claimed in one of claims 1 to 12, **characterized in that** the scraper-securing elements (40) which can be inserted from below into the insertion pockets have at their upper side limb beds (30) for the limbs of the horizontal chain links and have at their transverse sides a projection (49) which can be introduced into the grooves (13, 14).

14. Scraper-securing element for securing a scraper as claimed in one of claims 1 to 13 on a horizontal chain link, which is inserted in an insertion pocket on the scraper, of a link chain of a double center scraper chain conveyor, **characterized in that** the base (47) of the scraper-securing element (40) is provided on its transverse sides with a projection (49) for engagement with grooves in insides of the scraper wings and outsides of an intermediate web on the scraper.

15. Scraper as claimed in claim 13 or scraper-securing element as claimed in claim 14, **characterized in that** the scraper-securing elements (40) are provided in the base surface (46) of the base body (47) with a receiving recess (45) for the screw head of a fixing screw.

16. Scraper or scraper-securing element as claimed in claim 15, **characterized in that** the receiving recess (45) forms a positive-locking anti-twist device for the screw head, wherein the receiving recess is preferably formed as a transverse slot for rotationally fixed engagement of a screw head of a hammerhead screw as a fixing screw.

17. Scraper or scraper-securing element as claimed in one of claims 13 to 16, **characterized in that** the scraper-securing element (40) is provided centrally between both projections (49) with a raised portion (48), on both sides of which limb beds (30) for the limbs of the horizontal chain links are formed.

18. Scraper or scraper-securing element as claimed in one of claims 13 to 17, **characterized in that** the raised portion (48) is provided laterally with rounded portions for cooperation with limbs of the horizontal chain links of the link chain.

19. Scraper or scraper-securing element as claimed in one of claims 13 to 18, **characterized in that** the projection (49) comprises a vertical web with a preferably trapezoidal cross-section.

## Revendications

1. Raclette pour des chaînes à maillons de transporteurs à chaînes à raclettes, en particulier de transporteurs à chaînes à raclettes à double milieu, constituée d'un corps de raclette en un seul tenant comprenant une traverse de tête (2) qui relie deux ailes latérales de raclette (1) et au moins une poche de pose (5) entre les ailes de raclette (1) pour la mise en place d'un maillon horizontal de chaîne (52) de la chaîne à maillons et pour bloquer la raclette (10) sur un maillon horizontal de chaîne mis en place au moyen d'un élément de blocage de raclette (40) qui peut être libéré et relié à la traverse de tête (2), dans laquelle les parties intérieures (11) tournées l'une vers l'autre (11) des ailes de raclette (1) sont munies d'une rainure (13, 14) en dessous de la traverse de tête (2), dans laquelle la traverse de tête (2) présente sur deux côtés frontaux (19) une zone de contact (20) pour les tronçons arrondis des maillons verticaux de chaîne de la chaîne à maillons et présente sur sa face inférieure (2') vers les deux côtés de la zone de contact (20) un lit de flanc (15) pour des flancs des maillons horizontaux de chaîne, **caractérisée en ce que** les rainures (13, 14) dans les côtés intérieurs (11) s'étendent au-delà de la hauteur des lits de flanc (15) jusqu'à la traverse de tête (2) et forment des logements pour des saillies d'entraînement (58) sur les surfaces extérieures des flancs des maillons horizontaux de chaîne (52).

2. Raclette selon la revendication 1, **caractérisée en ce que** les rainures (13) dans les côtés intérieurs (11) s'étendent jusqu'à la face inférieure (8) des ailes de raclette (1).

3. Raclette selon l'une ou l'autre des revendications 1 et 2, **caractérisée en ce que**, sur la traverse de tête (2) entre les deux ailes de raclette (1), une traverse intermédiaire (6) est réalisée, laquelle limite respectivement une poche de pose (5) sur un côté par ses côtés extérieurs (12) tournés vers les côtés intérieurs et présente dans son côté extérieur (12) une rainure (14) qui s'étend au-delà de la hauteur des lits de flanc (15) jusqu'à la traverse de tête (2) et qui forme un logement pour une saillie d'entraînement sur la surface extérieure des flancs des maillons horizontaux de chaîne.

4. Raclette selon la revendication 3, **caractérisée en ce que** les rainures (14) dans les côtés extérieurs (12) s'étendent jusqu'à la face inférieure (7) de la traverse médiane (6).

5. Raclette selon l'une des revendications 1 à 4, **caractérisée en ce que** les lits de flanc (15) sont réalisés pour l'insertion des maillons horizontaux de chaîne qui présentent des faces frontales en ligne droite sur les parties des tronçons arrondis et des amincissements munis de saillies d'entraînement dans les côtés extérieurs des flancs.

6. Raclette selon l'une des revendications 1 à 5, **caractérisée en ce que** les zones de contact (20) sont réalisées pour le soutien des maillons verticaux de chaîne d'une chaîne à maillons dont la section transversale de fil métallique est constante sur toute la périphérie et est munie d'un méplat sur le côté extérieur.

7. Raclette selon l'une des revendications 1 à 6, **caractérisée en ce que** les lits de flancs (15) sont constitués de surfaces qui ont une finition aplatie vers les côtés intérieurs (11) et/ou vers les côtés extérieurs (12).

8. Raclette selon l'une des revendications 1 à 7, **caractérisée en ce que**, dans la traverse de tête (2) entre deux zones de contact (20), un passage de tournevis (21) est réalisé pour la tige d'une vis de fixation et/ou **en ce qu'**un renfoncement (22) est réalisé pour la mise en place d'un écrou qui est en interaction avec la vis de fixation.

9. Raclette selon la revendication 8, **caractérisée en ce qu'**un plan oblique d'introduction (23) s'embouche dans chaque renfoncement (22) pour un outil de libération.

10. Raclette selon l'une des revendications 1 à 9, **caractérisée en ce que** les zones de contact (20) s'étendent au-delà des faces frontales d'un prolongement (17) qui fait saillie vers le bas sur la traverse de tête (2) entre les lits de flanc (15).

11. Raclette selon la revendication 10, **caractérisée en ce que** le prolongement (17) est muni au centre du passage de tournevis (21) et/ou est muni latéralement d'arrondissements pour l'interaction avec les flancs des maillons horizontaux de chaîne de la chaîne à maillons.

12. Raclette selon l'une des revendications 1 à 11, **caractérisée en ce que** les rainures (13, 14) présentent une section transversale en forme de trapèze et/ou **en ce que** les ailes de raclette (1) sont munies d'un évidement (9) sur la face inférieure (8).

13. Raclette selon l'une des revendications 1 à 12, **caractérisée en ce que** les éléments de blocage de raclette (40) qui peuvent être insérés par le bas dans les poches de pose présentent sur leur côté supérieur des lits de flanc (30) pour les flancs des maillons horizontaux de chaîne et présentent sur leurs côtés transversaux une saillie (49) qui peut être insérée dans les rainures (13, 14).

14. Elément de blocage de raclette pour bloquer une raclette selon l'une des revendications 1 à 13 sur un maillon horizontal de chaîne d'une chaîne à maillons d'un transporteur à chaînes à raclettes à double milieu, lequel est mis en place dans une poche de pose sur la raclette, **caractérisé en ce que** le corps de base (47) de l'élément de blocage de raclette (40) est muni sur ses côtés transversaux d'une saillie (49) pour l'engagement dans des rainures dans les côtés intérieurs des ailes de raclette et dans les côtés extérieurs d'une traverse intermédiaire sur la raclette.

15. Raclette selon la revendication 13 ou élément de blocage de raclette selon la revendication 14, **caractérisé(e) en ce que** les éléments de blocage de raclette (40) sont munis d'un évidement de logement (45) pour la tête de vis d'une vis de fixation dans la surface de fond (46) du corps de base (47).

16. Raclette ou élément de blocage de raclette selon la revendication 15, **caractérisé(e) en ce que** l'évidement de logement (45) forme un dispositif anti-rotatoire par coopération de formes pour la tête de vis, sachant que l'évidement de logement est réalisé de préférence comme fente transversale pour l'engagement solidaire en rotation d'une tête de vis d'un boulon à tête rectangulaire comme vis de fixation.

17. Raclette ou élément de blocage de raclette selon l'une des revendications 13 à 16, **caractérisé(e) en ce que** l'élément de blocage de raclette (40) est muni d'un rehaussement (48) placé au milieu entre les deux saillies (49), vers les deux côtés duquel des lits de flanc (30) sont réalisés pour les flancs du maillon horizontal de chaîne.

18. Raclette ou élément de blocage de raclette selon l'une des revendications 13 à 17, **caractérisé(e) en ce que** le rehaussement (48) est muni d'arrondissements sur les côtés pour l'interaction avec des flancs des maillons horizontaux de chaîne de la chaîne à maillons.

19. Raclette ou élément de blocage de raclette selon l'une des revendications 13 à 18, **caractérisé(e) en ce que** la saillie (49) est constituée d'une traverse verticale avec une section transversale de préférence en forme de trapèze.
